# EUROPEAN PATENT SPECIFICATION

(11) **EP 1 477 027 B1**
(45) Date of publication and mention of the grant of the patent: **23.01.2008**
(21) Application number: 03737499.8
(22) Date of filing: 06.02.2003
(51) Int. Cl.: H04N 7/24, G06F 1/00

(54) **A PROCESS OF IPMP SCHEME DESCRIPTION FOR DIGITAL ITEM**
PROZESS ZUR IPMP-SCHEMA-BESCHREIBUNG FÜR EINEN DIGITALEN ARTIKEL
PROCEDE DE DESCRIPTION DE PLAN DE GESTION ET DE PROTECTION DE LA PROPRIETE INTELLECTUELLE POUR UN ARTICLE NUMERIQUE

(30) Priority: 08.02.2002 US 354527 P
(43) Date of publication of application: 17.11.2004
(73) Proprietor: MATSUSHITA ELECTRIC INDUSTRIAL CO., LTD, Kadoma-shi, Osaka 571-8501 (JP)
(72) Inventor: HUANG, Zhongyang, 680608 Singapore (SG); SHEN, Sheng Mei, 03-02 Windermere, 689093 Singapore (SG); JI, Ming, 389758 Singapore (SG); SENOH, Takanori, Hirakata-shi, Osaka 573-0093 (JP)
(74) Representative: Keck, Stephan
(86) International application number: PCT/JP2003/001217
(87) International publication number: WO 2003/067893

(56) References cited:
- WO-A-99/48296
- US-A- 6 138 119
- ISO/IEC JTC 1/SC 29/WG11 N4269: "CODING OF MOVING PICTURES AND AUDIO" INTERNATIONAL ORGANISATION FOR STANDARDISATION, July 2001 (2001-07), pages 1-38, XP002239146
- ISO/IEC JTC1/SC29/WG11 N3943: "Intellectual Property Management and Protection in MPEG Standards" INTELLECTUAL PROPERTY MANAGEMENT AND PROTECTION IN MPEG STANDARDS, January 2001 (2001-01), XP002178255

## Description

### TECHNICAL FIELD

The present invention relates to content distribution and protection in MPEG-21 scope, especially to such applications where the protected content is delivered and transferred based on MPEG-21 compliant devices.

### BACKGROUND ART

Today, many elements exist to build an infrastructure for the delivery and consumption of multimedia content. There is, however, no 'big picture' to describe how these elements, either in existence or under development, relate to each other. The aim for MPEG-21 is to describe how these various elements fit together. Where gaps exist, MPEG-21 will recommend which new standards are required. MPEG will then develop new standards as appropriate while other relevant standards may be developed by other bodies. These specifications will be integrated into the multimedia framework through collaboration between MPEG and these bodies.

MPEG-21 aims at setting out a vision for enabling transparent and augmented use of multimedia resources across a wide range of networks and devices used by different communities. The setting up 'big picture' is to describe how the specification of all the elements, which exist to build an infrastructure for the delivery and consumption of multimedia content. Now six key technical elements have been defined in MPEG-21: DID (Digital Item Declaration), DII&D or DIID (Digital Item Identification and Description), IPMP (Intellectual Property Management and Protection), RDD (Rights Data Dictionary), REL (Rights Expression Language), and DIA (Digital Item Adaptation).

Digital Items are defined as structured digital objects, including a standard representation and identification, and meta-data. This entity is the fundamental unit of distribution and transaction within the MPEG-21 framework as a whole. The means by which a Digital Item is defined is a Digital Item Declaration. The DID specifies the makeup, structure, and organization of a Digital Item. The DID has defined a useful model formed by a set of abstract terms and concepts for defining Digital Items. Within this model, a Digital Item is the digital representation of "a work", and as such, it is the item that is acted upon (managed, described, exchanged, collected, etc.) within the model. The goal of this model is to be as flexible and general as possible, while providing for the "hooks" that enable higher-level functionality. This, in turn, will allow the model to serve as a key foundation in the building of higher-level models in other MPEG-21 elements.

In MPEG standardisation group, people are working towards to standardise an IPMP (Intellectual Property Management and Protection) system that involves compliant terminal. All the terminals can represent a protected content that is encrypted and protected by following the same IPMP standard, no matter what kinds of IPMP tools they use. To achieve such a wide interoperability, IPMP provides download ability of tools, where tools can be retrieved remotely. IPMP also allows the terminal to choose its own favourite tool according to parametric description. An IPMP terminal can also aggregate several tools together to form a tool set (act as just one tool) according to some parametric aggregation.

The IPMP element should fit into DID model. But the current MPEG-21 IPMP terminal cannot meet the requirement for MPEG-21 framework based content - Digital Item distribution and protection. In other words, the IPMP scheme (information) such as IPMP tool information does not be included in the DID model, which is the core entity for compliant MPEG-21 terminal consuming and protecting the content.

In order to fit the flexible and interoperable IPMP system into whole MPEG-21 architecture, we should:
Design an appropriate and reasonable place to hold the IPMP information with other MPEG-21 elements information and referred resource under MPEG-21 DID model;
Provide the standard way to represent all IPMP related information for MPEG-21 IPMP system;
Provide the standard way for MPEG21-based application implementers to build a complaint MPEG-21 IPMP system based on IPMP information for MPEG-21 related "content" distribution and protection.

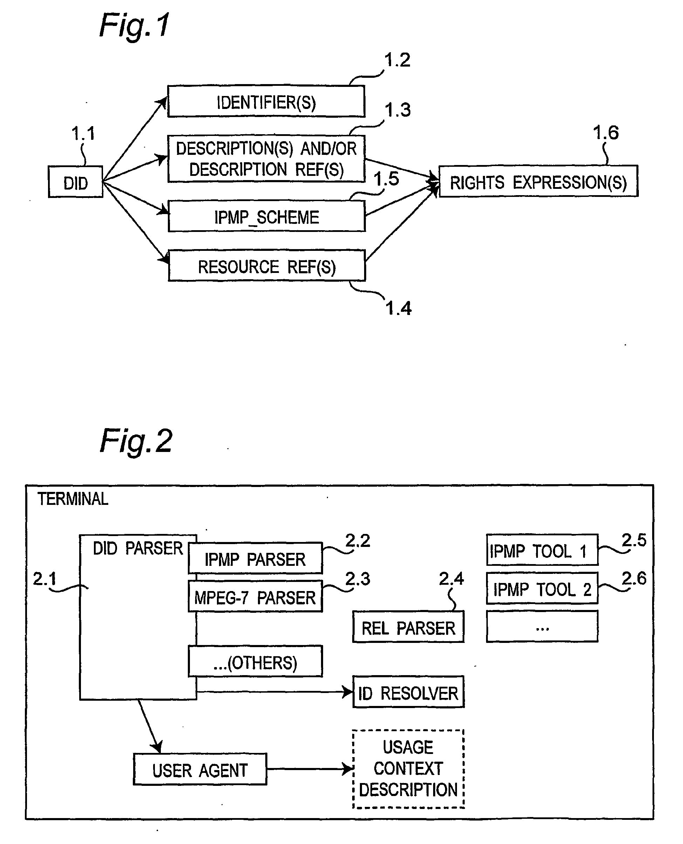

The document International Organisation For Standardization (07-2001): ISO/IEC JTC 1/SC 29/WG11 N4269, "Coding of moving pictures and audio", pp. 1-38, in particular section 4, gives an overview of IPMP extensions and explains an architecture for walkthrough concepts. In particular, a method of processing protected Content by using an IPMP Tool List that identifies the IPMP Tools is disclosed. Further, it is disclosed that IPMP information is related to IPMP Tools required to correctly process protected content. As shown in Fig. 1 the IPMP Tool List is pre-included in the content.

### DISCLOSURE OF INVENTION

On the content provider side, an incoming "content" is encoded and formed to be a MPEG-21 Digital Item including Digital Item Declaration (DID) with its referred resources. If the digital item is protected using MPEG-21 IPMP, IPMP Control Information and other IPMP information needs to be retrieved and constructed in DID.

After DID is received and sent to DID parser, the DID parser extracts IPMP scheme description (information) and sends to IPMP parser. Then the IPMP parser extracts all IPMP information and transfers the information to IPMP Tool Manager and Message Router in MPEG-21 IPMP system. Other IPMP Information such as IPMP message, Keys, etc could be put as OpaqueData in IPMP_Descriptor or the resource element in DID. When there is Rights Expression information under IPMP_Control_ Info_Descriptor, it is transferred to REL parser. The parsed rights information can be enforced by Rights Management Tool carried in the DID or the resource through Descriptor Reference (remotely).

The present invention provides a method of processing an IPMP Scheme description for a Digital Item in a server of the content provider as defined in claim 1.

Note that one primary feature of the above method is a step of incorporating the IPMP scheme descriptor to the DID in a specified place in a server. Therefore, the present invention can achieve advantages discussed later at least with the "incorporating" step. Component of the terminal can be omitted in this invention related to the server.

Further, the present invention provides a method of processing an IPMP Scheme description for a Digital Item in a terminal of a consumer of the content as defined in claim 6.

Note that one primary feature of the above method is in that the terminal can deal the IPMP scheme descriptor placed within a specified place of the DID. Therefore, an invention which includes at least one step to deal IPMP scheme descriptor or DID can achieve the advantages discussed later.

The above methods are explained as the server and the terminal with components which performs the above steps, respectively.

The present invention solves a problem of designing the standard way to be used in MPEG-21 Digital Item consuming in a secure manner, by providing a standard way to represent all IPMP related information for MPEG-21 IPMP system implementers to build the whole IPMP system for MPEG-21 related "content" distribution and protection;

This invention also solves the problem of incorporating IPMP element/part into whole MPEG-21 framework, by designing appropriate and reasonable place to hold the IPMP information under MPEG-21 DID model.

The details will be elaborated in the Embodiments.

### BRIEF DESCRIPTION OF DRAWINGS

This and other objects and features of the present invention will become clear from the subsequent description of a preferred embodiment thereof made with reference to the accompanying drawings, in which like parts are designated by like reference numerals and in which:
Fig. 1 is a diagram showing an example of MPEG-21 content model architecture;
Fig. 2 is a diagram showing an example of of MPEG-21 system architecture;
Fig. 3 is a diagram showing a relationship between DID, DIID and IPMP_Scheme;
Fig. 4 is a flowchart showing how IPMP information is transmitted between DID and IPMP system;
Fig. 5 is a diagram showing an architecture of IPMP_Scheme XML schema; and
Fig. 6 is a diagram showing a data flow in a server and a terminal.

### BEST MODE FOR CARRYING OUT THE INVENTION

Digital Items are defined as structured digital objects, including a standard representation and identification, and meta-data, which subordinates to the respective Digital Items to explain respective contents, for example, data on a title and copy authorization for motion picture. This entity is the fundamental unit of distribution and transaction within the MPEG-21 framework as a whole. Note that this invention can be applied to any formats other than MPEG-21, for example, to MPEG-7. Focusing on this unit related to MPEG-21, the six technical elements existing under MPEG-21 are briefly described and listed below:
- Digital Item Declaration (a uniform and flexible abstraction and interoperable schema for declaring Digital Items): it specifies the mechanism for declaring the structure and makeup of Digital Items;
- Digital Item Identification and Description (a framework for identification and description of any entity regardless of its nature, type or granularity): it specifies how Digital Items and parts and collections thereof can be described and uniquely identified;
- Intellectual Property Management and Protection Architecture or Tool Representation and Communication System (the means to enable content to be persistently and reliably managed and protected across a wide range of networks and devices): it specifies information related to intellectual property management and protection associated with the Digital Item;
- Rights Expression Language (a machine-readable language that can declare rights and permissions using the terms as defined in the Rights Data Dictionary): it specified flexible, interoperable mechanisms to support transparent and augmented use of digital resources and express their rights and interests in a way that addresses issues of privacy and use of personal data;
- Rights Data Dictionary (a set of clear, consistent, structured and integrated definitions of terms for use in the MPEG-21 Rights Expression Language);
- Digital Item Adaptation: provide tools to support resource adaptation, descriptor ('metadata') adaptation, and Quality of Service management.

A "tool" referred to in this specification is a computer executable program to execute one or more predetermined processes such as mutual authentication, decryption which comforms to Data Encryption Standard (DES). Such programs are available in the form of Dynamic Link Libraries (DLLs), JAVA code program modules, etc.

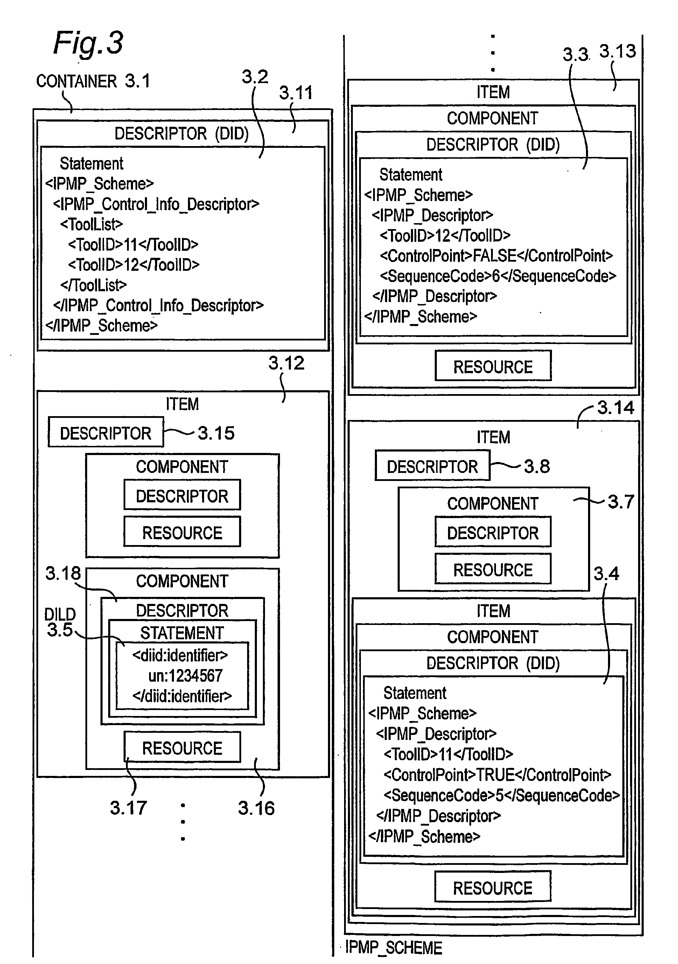

The means by which a Digital Item is defined is a Digital Item Declaration (DID) (the whole structure of Fig. 3). The DID specifies the makeup, structure, and organization of a Digital Item. This includes a list of the resources, relevant metadata, and the relationships among the parts. The DID has defined a useful model (unit 3.1 in Fig. 3) formed by a set of abstract terms and concepts such as Container, Item, Component, Anchor, Descriptor, Condition, Choice, Selection, Annotation, Assertion, Resource, Fragment, Statement, etc (e.g. shown in Fig. 3 unit 3.7, 3.8, 3.13) for defining Digital Items. Within this model, a Digital Item is the digital representation of "a work", and as such, it is the item that is acted upon (managed, described, exchanged, collected, etc.) within the model. The goal of this model is to be as flexible and general as possible, while providing for the "hooks" that enable higher-level functionality. This, in turn, will allow the model to serve as a key foundation in the building of higher-level models in other MPEG-21 elements. The IPMP (Intellectual Property Management and Protection) element should also fit into this model.

Initially, by referring to Fig. 3, organization of container 3.1 of a Digital Item is described. Container 3.1 with the following arrangement is created by a server by placing elements. From the beginning of Container 3.1, Container 3.1 has Descriptor 3.11, Item 3.12, 3.13, and 3.14 in this order and is described in text format by using XML.

Descriptor 3.11 shows, for example, what types of Items are included in the container 3.1 and also called as Digital Item Declaration (DID), or as Container Descriptor. Descriptor 3.11 includes IPMP scheme descriptor 3.2, shown as "Statement". At the beginning of IPMP scheme descriptor 3.2, IPMP control information descriptor (IPMP_Contro_Info_Descriptor) is placed, which describes a list of tool(s) to be used when an encode of a server encodes a content.

Items 3.12 to 3.14 respectively relate to content such as motion pictures, still pictures, and audio. For example, Item 3.12 includes Descriptor 3.15 and one or more Components such as Component 3.16. Descriptor 3.15 describes unique information on Item 3.12. Component 3.16 includes resource 3.17 and Descriptor 3.18 for resource 3.17. The Descriptor (DID) 3.18 includes Digital Item Identification and Description (DIID) 3.5 which identifies Resource 3.17 by a identifier. Resource 3.17 is an actual data such as motion pictures, still pictures, and audio. Alternately, Resource 3.17 may be URL (Uniform Resource Locator) which specifies a server in a network, in which the actual data is stored.

Each arrangement of Items 3.13 and 3.14 is the same as that of item 3.12. Items 3.13 and 3.14 have a Component which includes Descriptor (DID) and Resource. The respective Descriptors (DID) have Statements 3.3 and 3.4 as IPMP Scheme Descriptors. The IPMP Scheme Descriptor has an IPMP descriptor which specifies necessary IPMP information on one of completely described IPMP Tool information and related control message for specific protected resource. IPMP descriptor is placed in the nearest resource Descriptor (i.e. a Descriptor (DID) corresponding to the resource) within the same Component parent element under the DID, to be distributed to Users. Detailed explanation of the above elements is described later.

Fig. 1 shows an MPEG-21 content model architecture. The unit 1.1 DID specifies the makeup, structure, and organization of a Digital Item as shown in unit 3.1. The unit 1.1 DID includes a list of the Identifications (unit 1.2) such as ID number(s) of the Digital Item, Descriptions (unit 1.3) such as a title of the Digital Item and copyright information, referred Resources (unit 1.4) such as a URL (Uniform Resource Locator) of a resource, and the relationships among the parts.

The IPMP framework is a terminal system interface that supports tools for enforcing rights expressions that might be associated with (by direct containment, or some other linkage). We add one unit 1.5 "IPMP_Scheme" under DID model to try to link DID with IPMP framework. The unit 1.6 Rights Expressions may be contained in descriptions (and/or refs), and/or resource ref(s) and/or IPMP_Scheme. The unit 1.6 Rights Expressions has information on copyright, by which information in units 1.3 through 1.5 can be referred. The unit 1.6 can be included in the end of statement 3.2 (Fig. 3), in statement 3.3 of Component within Item 1.13 (Fig. 3), or in any statement.

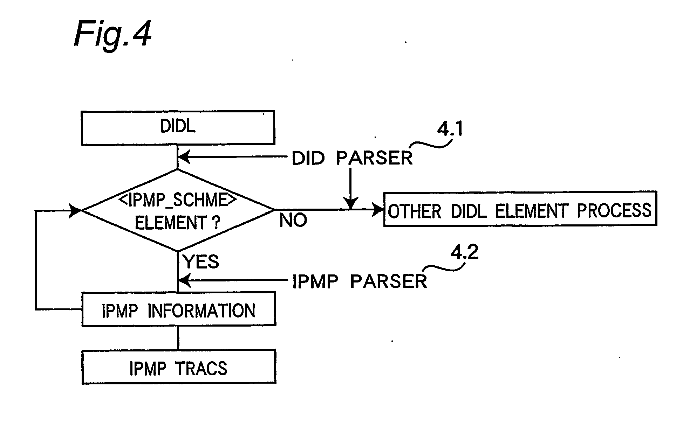

Fig. 2 shows an MPEG-21 system architecture. Under the MPEG-21 framework, when a clear DI Declaration coming, it is parsed by DID Parser (module 2.1). In this invention, it concerns, while parsing a part of the Declaration, the DID Parser encounters a Descriptor that identifies an IPMP_Scheme description that is used to protect the contents (DI) or part of the contents (Component Resource). The DID Parser will invoke the module 2.2 IPMP parser to interpret IPMP_Scheme schema and then passes the IPMP_Scheme information together with the protected content information (or the means to obtain it) to the IPMP system. The explanation about the IPMP scheme (information) transmission between DID parser (module 4.1) and IPMP parser (module 4.2) can also be seen in a flowchart of Fig. 4.

Note that the protected content can itself be another DID, or a fragment of a DID, or a resource. The two parts/descriptors of IPMP_Scheme under the entire Digital Item Declaration can be signed/encrypted separated from whole DID or as part of signed/encrypted Declaration.

For the same situation, the DID Parser encounters a Descriptor containing an MPEG-7 description, and invokes the module 2.3 MPEG-7 parser, passing the description to it. The MPEG-7 description itself may be protected, and the protection scheme can be identified by another IPMP_Descriptor within the same parent Descriptor.

The Digital Item Declaration arrives by some means. In some cases, the entire Declaration may be encrypted or signed. It is also possible that only the IPMP scheme descriptor under DID are encrypted or signed.

In Fig. 2, different modules existing in the MPEG-21 system architecture can be briefly described as following:

### 1) DID Parser (module 2.1, 4.1)

It receives the DID from the MPEG-21 (De)Mux and parses the DIDL text declaring the structure of the Digital Item. When DID Parser parses the DIDL text and finds no <IPMP_Scheme> Element ("No" in Figure 4), DID parser performs other DIDL element Process. On the other hand, when the DID Parser finds <IPMP Scheme> Element ("Yes" in Figure 4), the IPMP information text of DIDL is sent to IPMP Parser 4.2.

### 2) IPMP Parser (module 2.2, 4.2)

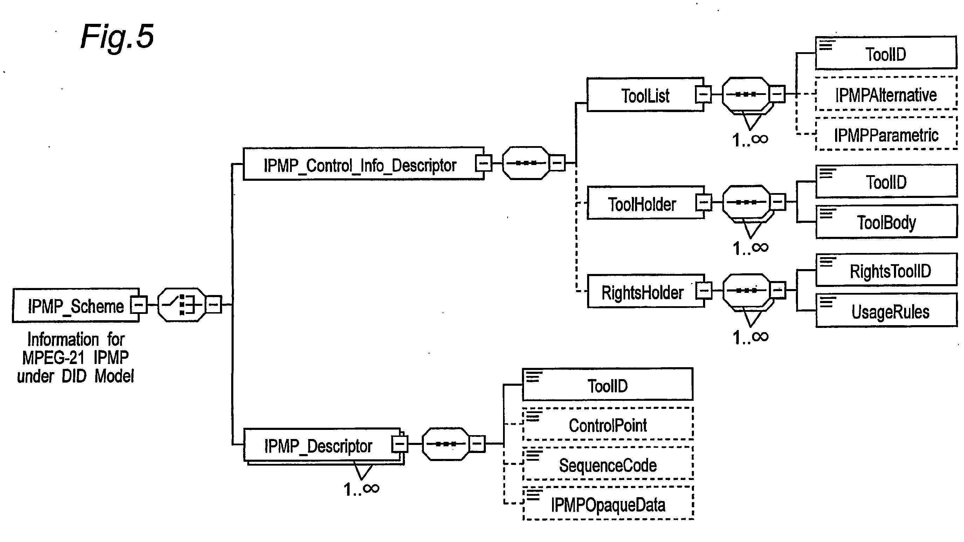

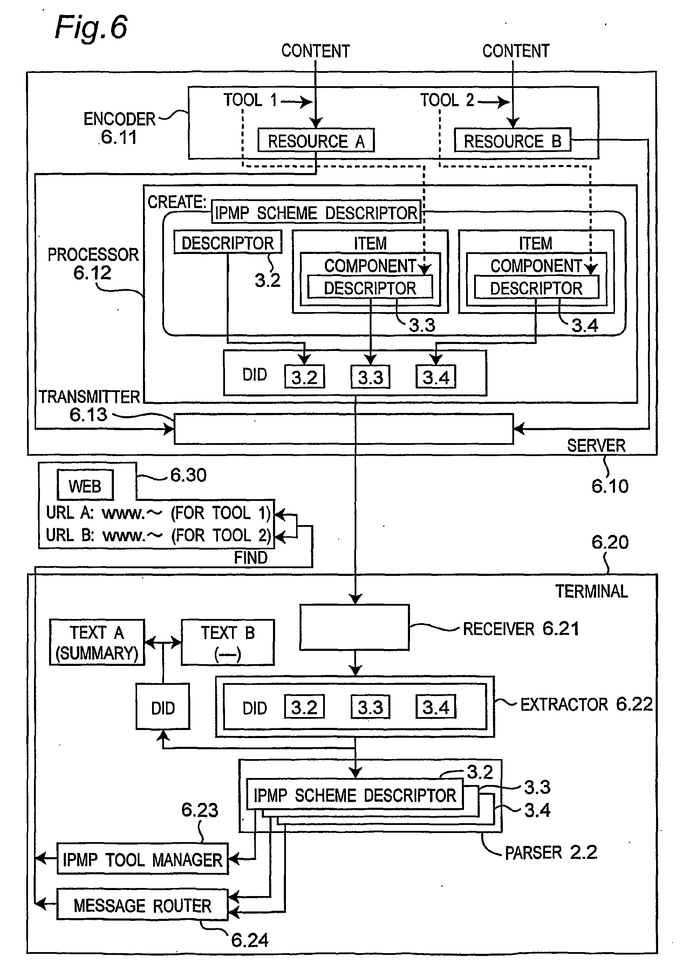

It receives the IPMP information text (in XML with hierarchical structure as shown in Fig. 5) held in DID and parses it. It will usually use IPMP Tool(s) to act upon this IPMP information (and other information, e.g. REL). After the IPMP Parser parses the IPMP information, Digital Item (i.e. content) is processed according to the parsed IPMP information by, for example, IPMP Tool Manager 623/Message router 6.24 (Fig. 6), which is shown as "IPMP TRACS" in fig. 4.

### 3) REL Parser (module 2.4)

It receives the REL text (in XML) held in DID or IPMP information and parses it.

The whole DID model includes Digital Item Identification and Description (DIID) (unit 3.5) and IPMP information (unit 3.2, 3.3, 3.4) held in IPMP_Scheme descriptor and the relationship between DID (MPEG-21 part 2), DIID (MPEG-21 part 3), and IPMP (MPEG-21 part 4) can be seen in Fig. 3. Two descriptors, "IPMP_Control_Info_Descriptor" (unit 3.2) and "IPMP_Descriptor" (unit 3.3, 3.4) in Fig. 3 can provide different IPMP information description for MPEG-21 IPMP system to protect the MPEG-21 content.

### MPEG-21 IPMP_Scheme descriptor IPMP_Control_Info_Descriptor and IPMP_Descriptor

The MPEG-21 IPMP system has been designed to provide a framework and specifications to allow the same protected content to be consumed on different vendors' terminals; it also allows the same content to be protected by different vendors' IPMP Tools. It can provide interoperability, renewability and flexibility through IPMP Tools. (IPMP Tools: modules 2.5, 2.6 that perform (one or more) IPMP functions such as authentication, decryption, watermarking, etc.)

So in the two proposed descriptors of IPMP_Scheme, the most important information/messages needed to transferring between DID model and IPMP system are IPMP Tools related and other IPMP control information.

### IPMP_Control_Info_Descriptor

A Container is a structure that allows Items to be grouped. These groupings of Items can be used to form logical *packages* (for transport or exchange) or logical shelves (for organization). Descriptor "labelling" of Container allows including information that is appropriate for the purpose of the grouping. IPMP_Control_Info_Descriptor is designed under the outmost Container Descriptor's Statement. It includes the IPMP Control Information, which contains necessary information like Tool List, IPMP Tool Holder and IPMP Rights Holder.

The IPMP Tool List identifies and enables selection of, the IPMP Tools required to process and protect the Content. It includes a list of IPMP tools and is used to specify all IPMP tools that should be used in order to consume the content. By this Tool List, the terminal will determine the IPMP Tools obtained either from local terminal, carried in the content or obtained from remote sites. ToolID is the identifier of the logical IPMP Tool required by the Device and represented by an Unsigned Integer. The Tool List may include IPMPAlternative and IPMPParametric to denote a list of alternate IPMP Tools and the parametric description of an IPMP Tool. These two elements definition and semantic can be further extended.

Tool Holder maybe cases whereby content (DI) itself carry the binary IPMP Tool. The device may retrieve the IPMP Tool from the content, load it, instantiate it and immediately use it in order to play out the content. It includes ToollD and ToolBody represented by Bytes.

Rights Holder conveys the Rights/Usage Rules associate with the IPMP protected content. Similarly, it includes Rights ToollD especially for Rights Parser such as REL parser (module 2.4), proprietary rights management tool (XrML parser, ODRL parser, etc). Bytes-represented Usage Rule transformed from XML-based Rights Expression is another element of Rights Holder. It has been discussed widely and intensively on the MPEG-21 scope that where the IP (REL related Rights/Usage Rules information) should be located and how to deliver it. One solution is that the rights information should be packaged into the form of a ticket or a voucher out of band. The ticket usually includes detailed rights for the content using a certain rights language. Descramble key may also be carried in the ticket. A sort of ID scheme should be also included in the ticket, so that the voucher and ticket can be uniquely and unambiguously linked with certain content. This kind of rights conveyance and delivery is an implementation issue, and MPEG does not need to standardize it. Another one is that rights information should reside in the individual resource. In this way content and rights information are tightly bounded together. In this invention, a new holder RightsHolder in IPMP_Control_Info_Descriptor under IPMP_Scheme is proposed to carry rights information.

### IPMP_Descriptor

A resource is an individually identifiable asset such as a video or audio clip, an image, or a textual asset. A resource may also potentially be a physical object. All resources must be locatable via an unambiguous address. IPMP_Descriptor is designed to make the resource in the Item is covered by completely described IPMP Tool information and related control message for consuming such resource. It should reside in the nearest Descriptor element of the resource element within the same Component parent element.

This descriptor also conveys the control point information of the IPMP Tool, including at which control point the tool resides (before or after the practical resource consuming), and its sequence relation to other tools reside at the control point.

ToolID has the same concept as defined in IPMP_Control_info_Descriptor and clearly give the Tool information that which Tool is used to protect the attached resource. ControlPoint value denoted by a Boolean type specify the IPMP control point at which the IPMP tool resides and actives before or after the practical resource consuming. In other words, in the case the Boolean type is "True", tools are used before decoding the content. In the case "False", tools are used after decoding the content. SequenceCode value specifying the relation of the IPMP Tool to IPMP Tool(s) residing at the same control point. The value of the element specifies the priority of this IPMP Tool at this specific control point. Final element in IPMP_Descriptor is IPMPOpaqueData which indicates opaque data to control the IPMP Tool. The opaque data contains information dependent on each user.

Other IPMP Information such as IPMP message, Keys, etc could be put in the resource element in DID.

### Schema for proposed IPMP_Scheme descriptor

```
 <?xml version="1.0" encoding="UTF-8"?>
 <!-- edited with XML Spy v4.0 (http://www.xmlspy.com) by Huang Zhongyang (Panasonic
 Singapore Laboratories Pte Ltd) -->
 <xs:schema xmlns:xs="http://www.w3.org/2001/XMLSchema" elementFormDefault="qualified"
 attributeFormDefault="unqualified">
  <xs:element name="IPMP_Scheme">
     <xs:annotation>
      <xs:documentation>Information for MPEG-21 IPMP under DID
 Model</xs:documentation>
     </xs:annotation>
     <xs:complexType>
      <xs:choice>
       <xs:element name="IPMF_Control_Info_Descriptor">
          <xs:complexType>
            <xsaequence>
             <xs:element name="ToolList">
               <xs:complexType>
                   <xs:sequence maxOccurs="unbounded">
                   <xs:element name="ToollD" type="xs:unsignedlnt"/>
                   <xs:element name="IPMPAlternative" minOccurs="0"/>
                   <xs:element name="IPMPParametric" minOccurs="0"/>
                  </xs:sequence>
               </xs:complexType>
             </xs:element>
             <xs:element name="ToolHolder" minOccurs="0">
                <xs:complexType>
                   <xs:sequence maxOccurs="unbounded">
                   <xs:element name='TooIID" type="xs:unsignedlnt"/>
                   <xs:element name="ToolBody" type="xs:byte"/>
                   </xs:sequence>
                </xs:complexType>
              </xs:element>
              <xs:element name="RightsHolder" minOccurs="0">
                <xs:complexType>
                   <xs:sequence maxOccurs="unbounded">
                   <xs:element name="RightsTooIID" type="xs:unsignedlnt"/>
                   <xs:element name="UsageRules" type="xs:byte"l>
                   </xsaequence>
                </xs:complexType>
              </xs:element>
             </xsaequence>
           </xs:complexType>
        </xs:element>
        <xs:element name="IPMP_Descriptor" maxOccurs="unbounded">
           <xs:complexType>
             <xsaequence>
             <xs:element name="TooIID" type="xs:unsignedInt"/>
             <xs:element name="ControlPoint" type="xs:boolean" minOccurs="0"/>
             <xs:element name="SequenceCode" type="xs:unsignedInt" minOccurs="0"/>
             <xs:element name="IPMPOpaqueData" type="xs:byte" minOccurs="0"/>
             </xs:sequence>
           </xs:complexType>
        </xs:element>
       </xs:choice>
      </xs:complexType>
   </xs:element>
 </xs:schema>
```

Fig. 5 shows the architecture of the IPMP_Scheme XML Schema where its semantic of elements in the schema can refer to a section explaining "MPEG-21 IPMP_Scheme descriptor - IPMP_Control_Info_Descriptor and IPMP_Descriptor".

Now, general operations of a server of a content provider and a terminal of a consumer are described below. Fig. 6 is a diagram showing data flow in a server 6.10 and a terminal 6.20. An encoder 6.11 of server 6.10 encodes a content by using tool 1 to creat encoded resource A, and encodes the other content by using tool 2 create encoded resource B. A processor 6.12 of server 6.10 generates information on encoded resources within the IPMP Scheme Descriptor. The IPMP Scheme Descriptor contains three Descriptors 3.2 to 3.4 containing IPMP information, which are the same Descriptors as shown in Fig. 3. Note that Descriptor 3.3 of Component within the Item indicates information on Tool 1, for example, information on URL (Uniform Resource Locator) where the tool 1 is available. Similarly, Descriptor 3.4 indicates information on Tool 2. The processor 6.12 further creates DID with embedding three Descriptors 3.2 to 3.4 in it. Then, transmitter 6.13 of server 6.10 transmits the DID to terminal 6.20. With the DID, transmitter 6.13 also transmits encoded resources A and B to terminal 6.20.

Receiver 6.21 of Terminal 6.20 receives the DID. Then Extractor 6.22 of Terminal 6.20 extracts IPMP scheme descriptors 3.2 to 3.4 with IPMP information from the received DID. IPMP parser 2.2 (Fig. 2) parses the extracted IPMP scheme descriptors 3.2 to 3.4 to transfer the IPMP information to IPMP Tool Manager 623/Message router 6.24 in terminal 6.20. In the case that IPMP information in the IPMP scheme descriptors is for tool(s), the information is sent to IPMP Tool Manager 6.23. In the case that information on controls for interpretation is included in the IPMP scheme descriptors, the information is sent to Message router 6.24 to be sent to appropriate target. In other words, IPMP Tool Manager 6.23/Message router 6.24 interpret the IPMP information to activate protection on resources in terminal. More specifically, IPMP Tool Manager 6.23/Message router 6.24 accesses one or more web sites within Web 6.30 indicated by URL A and URL B to find and obtain Tool 1 and Tool 2. Then, terminal 6.20 can decode the encoded resources A and B by using Tools 1 and 2. Remaining DID indicates Text A which is a summary for resource A, and indicates Text B. According to the above operations, the consumer can enjoy the content. Note that Fig. 2 shows components of terminal 6.20 in more detail.

According to a server of the present invention includes:
A means to define the place for DID to include the IPMP information;
A means to define an IPMP scheme description for Digital Item based on XML schema to be effectively constructed and organized;
A means to pass IPMP control information to MPEG-21 IPMP system before accessing any Digital Item Resources in MPEG-21 architecture; and
A means to protect Resources using adjacent IPMP information in MPEG-21 compliant terminal.

The present invention can provide processing methods of a server and a terminal, and further provides a server and a terminal as follows:
(1) Methods of IPMP Scheme description for Digital Item in MPEG-21 Architecture, including the following steps of:
   Specifying and defining a flexible IPMP Scheme Description Schema and Language to describe IPMP control information and tool information commonly used for MPEG-21 IPMP system to protect MPEG-21 content;
   Creating IPMP scheme descriptor with IPMP information inside based on the said IPMP Scheme Description Schema and Language when a MPEG-21 DID with its referred Resource is created and encoded;
   Incorporating the said IPMP scheme descriptor to the said MPEG-21 DID in a specified place to be distributed to Users;
   Implementing a MPEG-21 terminal with building a IPMP Parser based on the said IPMP Scheme Description Schema and Language to extract the said IPMP scheme descriptor from the said DID and transfer them to MPEG-21 IPMP tool Manager/Message Router;
   Building the said terminal with the said Tool Manager/Message Router to interpret the said IPMP information inside the said IPMP scheme descriptor and enforce the protection on the MPEG-21 content in the said terminal.
(2) Methods of IPMP Scheme description for Digital Item in MPEG-21 Architecture, including the following steps of:
   Specifying and defining a flexible IPMP Scheme Description Schema and Language to describe IPMP control information and tool information commonly used for MPEG-21 IPMP system to protect MPEG-21 content;
   Creating IPMP scheme descriptor with IPMP information inside based on the said IPMP Scheme Description Schema and Language when a MPEG-21 DID with its referred Resource is created and encoded;
   Incorporating the said IPMP scheme descriptor to the said MPEG-21 DID in a specified place to meet the MPEG-21 IPMP system specifications, to be distributed to Users;
   Implementing a MPEG-21 terminal with building a IPMP Parser based on the said IPMP Scheme Description Schema and Language to extract the said IPMP scheme descriptor from the said DID and transfer them to MPEG-21 IPMP tool Manager/Message Router;
   Building the said terminal with the said Tool Manager/Message Router to interpret the said IPMP information inside the said IPMP scheme descriptor and enforce the protection on the MPEG-21 content in the said terminal;
   Receiving the said DID and its referred Resource with the said IPMP information in the said IPMP scheme descriptor in the said terminal;
   Extracting the said IPMP scheme descriptor with the said IPMP information from the received DID;
   Parsing the said IPMP scheme descriptor by the said IPMP Parser in the said terminal and transferring the said IPMP information to IPMP Tool Manager/Message Router;
   Interpreting the said IPMP information by IPMP Tool Manager/Message Router to activate the protection on Resources in the said terminal.
(3) Methods of IPMP Scheme description for Digital Item in MPEG-21 Architecture, including the following steps of:
   Specifying and defining a flexible IPMP Scheme Description Schema and Language to describe IPMP control information and tool information commonly used for MPEG-21 IPMP system to protect MPEG-21 content;
   Creating IPMP scheme descriptor with IPMP information inside based on the said IPMP Scheme Description Schema and Language when a MPEG-21 DID with its referred Resource is created and encoded;
   Producing IPMP control information descriptor, part of the said IPMP scheme descriptor, based on the said IPMP Scheme Description Schema and Language to specify necessary IPMP information like Tool List, IPMP Tool Holder and IPMP Rights Holder;
   Incorporating the said IPMP scheme descriptor to the said MPEG-21 DID in a specified place to meet the MPEG-21 IPMP system specifications, to be distributed to Users;
   Implementing a MPEG-21 terminal with building a IPMP Parser based on the said IPMP Scheme Description Schema and Language to extract the said IPMP scheme descriptor from the said DID and transfer them to MPEG-21 IPMP tool Manager/Message Router,
   Building the said terminal with the said Tool Manager/Message Router to interpret the said IPMP information inside the said IPMP scheme descriptor and enforce the protection on the MPEG-21 content in the said terminal.
   Receiving the said DID and its referred Resource with the said IPMP information in the said IPMP descriptor in the said terminal;
   Extracting the said IPMP descriptor with the said IPMP information from the received DID;
   Parsing the said IPMP scheme descriptor by the said IPMP Parser in the said terminal and transferring the said IPMP information to IPMP Tool Manager/Message Router;
   Interpreting the said IPMP information by IPMP Tool Manager/Message Router to activate the protection on Resources in the said terminal.
(4) Methods of IPMP Scheme description for Digital Item in MPEG-21 Architecture, including the following steps of:
   Specifying and defining a flexible IPMP Scheme Description Schema and Language to describe IPMP control information and tool information commonly used for MPEG-21 IPMP system to protect MPEG-21 content;
   Creating IPMP scheme descriptor with IPMP information inside based on the said IPMP Scheme Description Schema and Language when a MPEG-21 DID with its referred Resource is created and encoded;
   Producing IPMP control information descriptor, part of the said IPMP scheme descriptor, based on the said IPMP Scheme Description Schema and Language to specify necessary IPMP information like Tool List, IPMP Tool Holder and IPMP Rights Holder;
   Incorporating the said IPMP scheme descriptor to the said MPEG-21 DID in a specified place to meet the MPEG-21 IPMP system specifications, to be distributed to Users;
   Placing the said IPMP control information descriptor under the said MPEG-21 DID at the beginning of Container Descriptor's Statement element, to be distributed to Users;
   Implementing a MPEG-21 terminal with building a IPMP Parser based on the said IPMP Scheme Description Schema and Language to extract the said IPMP scheme descriptor from the said DID and transfer them to MPEG-21 IPMP tool Manager/Message Router;
   Building the said terminal with the said Tool Manager/Message Router to interpret the said IPMP information inside the said IPMP scheme descriptor and enforce the protection on the MPEG-21 content in the said terminal.
   Receiving the said DID and its referred Resource with the said IPMP information in the said IPMP descriptor in the said terminal;
   Extracting the said IPMP descriptor with the said IPMP information from the received DID;
   Parsing the said IPMP scheme descriptor by the said IPMP Parser in the said terminal and transferring the said IPMP information to IPMP Tool Manager/Message Router;
   Interpreting the said IPMP information by IPMP Tool Manager/Message Router to activate the protection on Resources in the said terminal.
(5) Methods of IPMP Scheme description for Digital Item in MPEG-21 Architecture, including the following steps of:
   Specifying and defining a flexible IPMP Scheme Description Schema and Language to describe IPMP control information and tool information commonly used for MPEG-21 IPMP system to protect MPEG-21 content;
   Creating IPMP scheme descriptor with IPMP information inside based on the said IPMP Scheme Description Schema and Language when a MPEG-21 DID with its referred Resource is created and encoded;
   Producing IPMP descriptor, part of the said IPMP scheme descriptor, based on the said IPMP Scheme Description Schema and Language to specify necessary IPMP information like completely described IPMP Tool information and related control message for specific protected Resource;
   Incorporating the said IPMP scheme descriptor to the said MPEG-21 DID in a specified place to meet the MPEG-21 IPMP system specifications, to be distributed to Users;
   Implementing a MPEG-21 terminal with building a IPMP Parser based on the said IPMP Scheme Description Schema and Language to extract the said IPMP scheme descriptor from the said DID and transfer them to MPEG-21 IPMP tool Manager/Message Router;
   Building the said terminal with the said Tool Manager/Message Router to interpret the said IPMP information inside the said IPMP scheme descriptor and enforce the protection on the MPEG-21 content in the said terminal.
   Receiving the said DID and its referred Resource with the said IPMP information in the said IPMP descriptor in the said terminal;
   Extracting the said IPMP descriptor with the said IPMP information from the received DID;
   Parsing the said IPMP scheme descriptor by the said IPMP Parser in the said terminal and transferring the said IPMP information to IPMP Tool Manager/Message Router;
   Interpreting the said IPMP information by IPMP Tool Manager/Message Router to activate the protection on Resources in the said terminal.
(6) Methods of IPMP Scheme description for Digital Item in MPEG-21 Architecture, including the following steps of:
   Specifying and defining a flexible IPMP Scheme Description Schema and Language to describe IPMP control information and tool information commonly used for MPEG-21 IPMP system to protect MPEG-21 content;
   Creating IPMP scheme descriptor with IPMP information inside based on the said IPMP Scheme Description Schema and Language when a MPEG-21 DID with its referred Resource is created and encoded;
   Producing IPMP descriptor, part of the said IPMP scheme descriptor, based on the said IPMP Scheme Description Schema and Language to specify necessary IPMP information like completely described IPMP Tool information and related control message for specific protected Resource;
   Incorporating the said IPMP scheme descriptor to the said MPEG-21 DID in a specified place to meet the MPEG-21 IPMP system specifications, to be distributed to Users;
   Placing the said IPMP descriptor in nearest Resource Descriptor within the same Component parent element under the said MPEG-21 DID, to be distributed to Users;
   Implementing a MPEG-21 terminal with building a IPMP Parser based on the said IPMP Scheme Description Schema and Language to extract the said IPMP scheme descriptor from the said DID and transfer them to MPEG-21 IPMP tool Manager/Message Router;
   Building the said terminal with the said Tool Manager/Message Router to interpret the said IPMP information inside the said IPMP scheme descriptor and enforce the protection on the MPEG-21 content in the said terminal.
   Receiving the said DID and its referred Resource with the said IPMP information in the said IPMP descriptor in the said terminal;
   Extracting the said IPMP descriptor with the said IPMP information from the received DID;
   Parsing the said IPMP scheme descriptor by the said IPMP Parser in the said terminal and transferring the said IPMP information to IPMP Tool Manager/Message Router,
   Interpreting the said IPMP information by IPMP Tool Manager/Message Router to activate the protection on Resources in the said terminal.
(7) Methods of IPMP Scheme description for Digital Item in MPEG-21 Architecture, where incorporating the said IPMP scheme descriptor to the said DID, in one of the above items (1), (2), (3) (4), (5), and (6), further including the following steps of:
   Encrypting the said whole DID (a DIDL file) using any existing encryption algorithm;
   Distributing the said encrypted DID with the inside IPMP information to the said Users.
(8) Methods of IPMP Scheme description for Digital Item in MPEG-21 Architecture, where incorporating the said IPMP scheme descriptor to the said DID, in one of the above items (1), (2), (3) (4), (5), and (6) further including the following steps of:
   Digital signing the said whole DID (a DIDL file) using any digital signature algorithm;
   Distributing the said signed DID with the inside IPMP information to the said Users.
(9) Methods of IPMP Scheme description for Digital Item in MPEG-21 Architecture, where incorporating the said IPMP scheme descriptor to the said DID, in one of the above items (1), (2), (3) (4), (5), and (6) further including the following steps of:
   Encrypting just the said IPMP scheme descriptor using any existing encryption algorithm;
   Incorporating the said encrypted IPMP scheme descriptor with the said IPMP information to the said DID.
(10) Methods of IPMP Scheme description for Digital Item in MPEG-21 Architecture, where incorporating the said IPMP scheme descriptor to the said DID, in one of the above items (1), (2), (3) (4), (5), and (6) further including the following steps of:
   Digital signing just the said IPMP scheme descriptor using any digital signature algorithm;
   Incorporating the said signed IPMP scheme descriptor with the said IPMP information to the said DID.
(11) Methods of IPMP Scheme description for Digital Item in MPEG-21 Architecture, where extracting the said IPMP descriptor with the said IPMP information from the received DID, in one of the above items (2), (3) (4), (5), and (6) further including the following steps of:
   Parsing the said DID by the DID Parser in the said terminal;
   Detecting the said IPMP scheme descriptor inside the said DID when the said DID parser meeting the IPMP_Scheme tags of the said IPMP scheme descriptor;
   Extracting the said IPMP descriptor with the said IPMP information from the received DID by the said IPMP_Scheme tags and parsing the said IPMP scheme descriptor by the said IPMP Parser.
(12) Methods of IPMP Scheme description for Digital Item in MPEG-21 Architecture, where parsing the said IPMP scheme descriptor by the said IPMP Parser in the said terminal, in one of the above items (2), (3) (4), (5), and (6) further including the following steps of:
   Parsing the said IPMP scheme descriptor by the said IPMP Parser in the said terminal;
   Detecting the REL information inside the said IPMP scheme descriptor when the said IPMP parser meeting the REL tags of the said IPMP scheme descriptor;
   Extracting the said REL information from the said IPMP scheme descriptor by the said REL tags and parsing the said REL information by the REL Parser;
   Transferring the behaviour information of the said rights information to each component in the said terminal, to activate the said rights and usage rules described by the said REL information.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method of processing an IPMP scheme description for a Digital Item (3.12) in a server (6.10), wherein the server adds protection information into content of the Digital Item for sending the protected content to a terminal (6.20), the method being **characterized by**:
creating an IPMP scheme descriptor (3.2, 3.3, 3.4) including IPMP information based on a flexible IPMP Scheme Description Schema and Language describing an IPMP control information and tool information commonly used for an IPMP system to protect content, when a Digital Item Declaration (DID) with its referred resource is created and encoded, the IPMP scheme descriptor and the DID being not pre-included in the content;
incorporating the IPMP scheme descriptor (3.2, 3.3, 3.4) into the DID in a specified place to be distributed to Users; and
transferring the DID to a terminal (6.20) of the Users,
wherein the terminal (6.20) includes an IPMP Parser (2.2) which operates based on the IPMP Scheme Description Schema and Language to extract the IPMP scheme descriptor (3.2, 3.3, 3.4) from the DID, and
wherein the terminal (6.20) includes a Tool Manager (6.23) or a Message Router (6.24) for interpreting the IPMP information, included in the IPMP scheme descriptor (3.2, 3.3, 3.4) and extracted and transferred by the IPMP parser (2.2), and for enforcing protection on the content in the terminal (6.20).

2. A Method of processing an IPMP Scheme description for a Digital Item in the server (6,10) according to claim 1, further comprising the following steps of:
Producing an IPMP control information descriptor (3.2), as part of the IPMP scheme descriptor, based on the IPMP Scheme Description Schema and Language to specify necessary IPMP information on one of a Tool List, IPMP Tool Holder and IPMP Rights Holder; and
Placing the IPMP control information descriptor (3.2) under the DID at the beginning of a Container Descriptor's Statement element, to be distributed to Users.

3. A Method of processing an IPMP Scheme description for a Digital Item in the server (6.10) according to claim 1, comprising the following steps of:
Producing an IPMP descriptor (3.3, 3.4), as a part of the IPMP scheme descriptor, based on the IPMP Scheme Description Schema and Language to specify necessary IPMP information on one of a completely described IPMP Tool information and a related control message for a specific protected resource (3.17); and
Placing the IPMP descriptor (3.3, 3.4) in the nearest resource Descriptor (3.18) within the same Component parent element under the DID, to be distributed to Users.

4. A Method of processing an IPMP Scheme description for a Digital Item in the server (6.10) according to claim 1, comprising the following steps of:
Encrypting just the IPMP scheme descriptor (3.2, 3.3, 3.4) using any existing encryption algorithm; and
Incorporating the encrypted IPMP scheme descriptor including the IPMP information to the DID.

5. A Method of processing an IPMP Scheme description for a Digital Item in the server (6.10) according to claim 1, comprising the following steps of:
Digitally signing just the IPMP scheme descriptor (3.2, 3.3, 3.4) using any digital signature algorithm; and
Incorporating the signed IPMP scheme descriptor including the IPMP information into the DID.

6. A Method of processing an IPMP Scheme description for a Digital Item (3.12) in a terminal (6.20),
wherein, based on a flexible IPMP Scheme Description Schema and Language describing IPMP control information and tool information commonly used for an IPMP system to protect content, a server (6.10) creates an IPMP scheme descriptor (3.2, 3.3, 3.4) including IPMP information based on the IPMP Scheme Description Scheme and Language when a Digital Item Declaration (DID) with its referred resource is created and encoded, the IPMP scheme descriptor and the DID being not pre-included in the content;
wherein the server (6.10) incorporates the IPMP scheme descriptor into the DID in a specified place to be distributed to Users; and
wherein the server (6.10) transfers the DID to a terminal (6.20) of the users which is installed with an IPMP Parser (2.2) based on the IPMP Scheme Description Schema and Language to extract the IPMP scheme descriptor from the DID;
the method being **characterized by**:
Receiving the DID and its referred resource with the IPMP information in the IPMP scheme descriptor in the terminal (6.20);
Extracting the IPMP scheme descriptor including the IPMP information from the received DID;
Parsing the IPMP scheme descriptor by the IPMP Parser (2.2) in the terminal;
transferring the IPMP information to an IPMP Tool Manager (6.23) or a Message Router (6.24) in the terminal.
Interpreting the IPMP information included in the IPMP scheme descriptor which enforces protection on the content in the terminal, and
Activating the protection on resources in the terminal.

7. A Method of processing an PMP Scheme description for a Digital Item in the terminal (6.20) according to claim 6, comprising the following step of:
Parsing the DID by a DID, Parser (2.1) in the terminal (6.20);
Detecting the IPMP scheme descriptor (3.2, 3.3, 3.4) included in the DID when the DID parser (2.1) meets the IPMP_Scheme tags of the IPMP scheme descriptor
Extracting the IPMP descriptor including the IPMP information from the received DID by the IPMP_Scheme tags and parsing the IPMP scheme descriptor by the IPMP Parser (2.2).

8. A Method of processing an IPMP Scheme description for a Digital Item in the terminal (6.20) according to claim 6, comprising the following step of:
Parsing the IPMP scheme descriptor by the IPMP Parser (2.2) in the terminal;
Detecting REL information inside the IPMP scheme descriptor when the IPMP parser (2.2) meets an REL tag of the IPMP scheme descriptor,
Extracting the REL information from the IPMP scheme descriptor by the REL tag and parsing the REL information by an REL Parser (2.4);
Transferring behaviour information of rights information to each component in the terminal, to activate rights and usage rules described by the REL information.

9. A server (6.10) which processes an IPMP Scheme description for a Digital Item, wherein the server adds protection information into content of the Digital Item for sending the protected content to a terminal (6.20), the method being **characterized by**:
an encoder (6.11) which encodes a content to create a resource;
a processor (6.12) which creates a Digital Item Declaration (DID) with its referred resource, which creates an IPMP scheme descriptor (3.2, 3.3, 3.4) including IPMP information based on a flexible IPMP Scheme Description Schema and Language describing IPMP control information and tool information commonly used for an IPMP system to protect content, the IPMP Scheme descriptor and the DID being not pre-included in the content; and which incorporates the "IPMP scheme descriptor into the DID in a specified place to be distributed to Users; and
a transmitter (6.13) which transmits the DID to a terminal (6.20) of the users.

10. A terminal (6.20) which processes an IPMP Scheme description for a Digital Item, **characterized by**:
a receiver (6.21) which receives, from a server (6.10), a Digital Item Declaration (DID) and its referred resource including IPMP information in an IPMP scheme descriptor (3.2, 3.3, 3.4) based on the IPMP Scheme Description Schema and Language describing IPMP control information and tool information commonly used for an IPMP system to protect content, the IPMP scheme descriptor and the DID being not pre-included in the content;
an extractor (6.22) which extracts the IPMP scheme descriptor including the IPMP information from the received DID;
an IPMP parser (2.2) which parses the IPMP scheme descriptor; and
an IPMP Tool Manager (6.23) or a Message Router (6.24) which interprets the IPMP information included in the IPMP scheme descriptor transferred from the IPMP parser (2.2), and which enforces protection on the content in the terminal (6.20) by activating the protection on resources.

## Patentansprüche

1. Verfahren zum Verarbeiten einer IPMP-Schema-Beschreibung für einen digitalen Artikel (3.12) in einem Server (6.10), wobei der Server Schutzinformation in einen Inhalt des digitalen Artikels zum Senden des geschützten Inhalts an ein Terminal (6.20) hinzugefügt, wobei das Verfahren **gekennzeichnet ist durch**:
Erzeugen eines IPMP-Schema-Deskriptors (3.2, 3.3, 3.4) mit IPMP-Information auf Basis von flexiblen IPMP-Schema-Beschreibung-Schema und -Sprache, die eine IPMP-Steuerinformation und -Werkzeuginformation beschreiben, die gemeinsam für ein IPMP-System verwendet werden, um Inhalt zu schützen, wenn eine Digital-Artikel-Deklaration (DID) mit ihrer zugewiesenen Ressource erzeugt und verschlüsselt wird, wobei der IPMP-Schema-Deskriptor und die DID nicht in dem Inhalt vor-enthalten sind,
Eingliedern des IPMP-Schema-Deskriptors (3.2, 3.3, 3.4) in die DID an einem bestimmten Platz, die an Benutzer zu verteilen ist, und
Übertragen der DID an einen Terminal (6.20) der Benutzer,
wobei der Terminal (6.20) einen IPMP-Parser (2.2) aufweist, der auf Basis von IPMP-Schema-Beschreibung-Schema und -Sprache arbeitet, um den IPMP-Schema-Deskriptor (3.2, 3.3, 3.4) aus der DID zu extrahieren, und
wobei der Terminal (6.20) einen Werkzeug-Manager (6.23) oder einen Nachrichten-Router (6.24) zum Interpretieren der IPMP-Information aufweist, die in dem IPMP-Schema-Deskriptor (3.2, 3.3, 3.4) enthalten und **durch** den IPMP-Parser (2.2) extrahiert und übertragen ist, und zum Durchsetzen des Schutzes an dem Inhalt in dem Terminal (6.20).

2. Verfahren zum Verarbeiten einer IPMP-Schema-Beschreibung für einen digitalen Artikel in dem Server (6.10) gemäß Anspruch 1, ferner mit den Schritten:
Erzeugen eines IPMP-Steuer-Information-Deskriptors (3.2) als einem Teil des IPMP-Schema-Deskriptors auf Basis von IPMP-Schema-Beschreibung-Schema und -Sprache zum Spezifieren notwendiger IPMP-Information bezüglich einer Werkzeugliste, IPMP-Werkzeuginhaber oder IPMP-Rechteinhaber, und
Platzieren des IPMP-Steuer-Information-Deskriptors (3.2) unter der DID am Beginn eines Aussageelementes eines Container-Deskriptors, das an Benutzer zu verteilen ist.

3. Verfahren zum Verarbeiten einer IPMP-Schema-Beschreibung für einen digitalen Artikel in dem Server (6.10) gemäß Anspruch 1, mit den folgenden Schritten:
Erzeugen eines IPMP-Deskriptors (3.3, 3.4) als einem Teil des IPMP-Schema-Deskriptors auf Basis von IPMP-Schema-Beschreibung-Schema und -Sprache zum Bestimmen notwendiger IPMP-Information zu einer vollständig beschriebenen IPMP-Werkzeug-Information oder einer verwandten Steuernachricht für eine bestimmte geschützte Ressource (3.17), und
Platzieren des IPMP-Deskriptors (3.3, 3.4) in dem nächsten Ressourcen-Deskriptor (3.18) innerhalb des gleichen Komponentenelternelements unter der DID, die an Benutzer zu verteilen ist.

4. Verfahren zum Verarbeiten einer IPMP-Schema-Beschreibung für einen digitalen Artikel in dem Server (6.10) gemäß Anspruch 1, mit den folgenden Schritten:
Verschlüsseln lediglich des IPMP-Schema-Deskriptors (3.2, 3.3, 3.4) unter Verwendung irgendeines existierenden Verschlüsselungsalgorithmus, und
Eingliedern des verschlüsselten IPMP-Schema-Deskriptors einschließlich der IPMP-Information in die DID.

5. Verfahren zum Verarbeiten einer IPMP-Schema-Beschreibung für einen digitalen Artikel in dem Server (6.10) gemäß Anspruch 1, mit den folgenden Schritten:
digitales Signieren lediglich des IPMP-Schema-Deskriptors (3.2, 3.3, 3.4) unter Verwendung irgendeines digitalen Signaturalgorithmus, und
Eingliedern des signierten IPMP-Schema-Deskriptors einschließlich der IPMP-Information in die DID.

6. Verfahren zum Verarbeiten einer IPMP-Schema-Beschreibung für einen digitalen Artikel (3.12) in einem Terminal (6.20),
wobei auf Basis von flexiblen IPMP-Schema-Beschreibung-Schema und - Sprache, die IPMP-Steuerinformation und -Werkzeuginformation beschreiben, die gemeinsam für ein IPMP-System verwendet werden, um Inhalt zu schützen, ein Server (6.10) einen IPMP-Schema-Deskriptor (3.2, 3.3, 3.4) einschließlich von IPMP-Information auf Basis von IPMP-Schema-Beschreibung-Schema und - Sprache erzeugt, wenn eine Digital-Artikel-Deklaration (DID) mit ihrer zugewiesenen Ressource erzeugt und verschlüsselt wird, wobei der IPMP-Schema-Deskriptor und die DID nicht in dem Inhalt vor-enthalten sind,
wobei der Server (6.10) den IPMP-Schema-Deskriptor in der DID an einem bestimmen Platz eingliedert, um an Benutzer verteilt zu werden, und
wobei der Server (6.10) die DID an einen Terminal (6.20) der Benutzer überträgt, der mit einem IPMP-Parser (2.2) auf Basis von IPMP-Schema-Beschreibung-Schema und -Sprache ausgerüstet ist, um den IPMP-Schema-Deskriptor aus der DID zu extrahieren,
**gekennzeichnet durch**:
Empfangen der DID und ihrer zugewiesenen Ressource mit der IPMP-Information in dem IPMP-Schema-Deskriptor in dem Terminal (6.20);
Extrahieren des IPMP-Schema-Deskriptors einschließlich der IPMP-Information aus der empfangenen DID;
Parsen des IPMP-Schema-Deskriptors **durch** den IPMP-Parser (2.2) in dem Terminal;
Übertragen der IPMP-Information an einen IPMP-Werkzeug-Manager (6.23) oder einen Nachrichten-Router (6.24) in dem Terminal;
Interpretieren der IPMP-Information, die in dem IPMP-Schema-Deskriptor enthalten ist, die einen Schutz des Inhalts in dem Terminal durchsetzt, und
Aktivieren des Schutzes von Ressourcen in dem Terminal.

7. Verfahren zum Verarbeiten einer IPMP-Schema-Beschreibung für einen digitalen Artikel in dem Terminal (6.20) gemäß Anspruch 6, mit den folgenden Schritten:
Parsen der DID durch einen DID-Parser (2.1) in dem Terminal (6.20),
Erfassen des IPMP-Schema-Deskriptors (3.2, 3.3, 3.4), der in der DID enthalten ist, wenn der DID-Parser (2.1) auf die IPMP-Schema-Marken des IPMP-Schema-Deskriptors stößt,
Extrahieren des IPMP-Deskriptors mit der IPMP-Information aus der empfangenen DID mittels der IPMP-Schema-Marken und Parsen des IPMP-Schema-Deskriptors durch den IPMP-Parser (2.2).

8. Verfahren zum Verarbeiten einer IPMP-Schema-Beschreibung für einen digitalen Artikel in dem Terminal (6.20) gemäß Anspruch 6, mit den folgenden Schritten:
Parsen des IPMP-Schema-Deskriptors durch den IPMP-Parser (2.2) in dem Terminal,
Erfassen von REL-Information innerhalb des IPMP-Schema-Deskriptors, wenn der IPMP-Parser (2.2) auf eine REL-Marke des IPMP-Schema-Deskriptors stößt,
Extrahieren der REL-Information aus dem IPMP-Schema-Deskriptor mittels der REL-Marke und Parsen der REL-Information durch einen REL-Parser (2.4),
Übertragen von Verhaltensinformation von Rechteinformation an jede Komponenten in dem Terminal, um Rechte und Verwendungsregeln zu aktivieren, die durch die REL-Information beschrieben sind.

9. Server (6.10), der eine IPMP-Schema-Beschreibung für einen digitalen Artikel verarbeitet, wobei der Server Schutzinformation in einen Inhalt des digitalen Artikels zum Senden des geschützten Inhalts an ein Terminal (6.20) hinzufügt, wobei das Verfahren **gekennzeichnet ist durch**,
**gekennzeichnet durch**:
einen Kodierer (6.11), der einen Inhalt kodiert, um eine Ressource zu erzeugen, einen Prozessor (6.12), der eine Digital-Artikel-Deklaration (DID) mit ihrer zugewiesenen Ressource erzeugt, der einen IPMP-Schema-Deskriptor (3.2, 3.3, 3.4) einschließlich IPMP-Information auf Basis von flexiblen IPMP-Schema-Beschreibung-Schema und -Sprache erzeugt, die IPMP-Steuerinformation und - Werkzeuginformation beschreiben, die gemeinsam für ein IPMP-System verwendet werden, um Inhalt zu schützen, wobei der IPMP-Schema-Deskriptor und die DID nicht in dem Inhalt vor-enthalten sind, und der den IPMP-Schema-Deskriptor in die DID an einem bestimmten Platz eingliedert, um an Benutzer verteilt zu werden, und
einen Sender (6.13), der die DID an ein Terminal (6.20) der Benutzer übermittelt.

10. Terminal (6.20), der eine IPMP-Schema-Beschreibung für einen digitalen Artikel verarbeitet, **gekennzeichnet durch**:
einen Empfänger (6.21), der von einem Server (6.10) eine Digital-Artikel-Deklaration (DID) und ihre zugewiesene Ressource einschließlich von IPMP-Information in einem IPMP-Schema-Deskriptor (3.2, 3.3, 3.4) auf Basis von IPMP-Schema-Beschreibung-Schema und -Sprache empfängt, die IPMP-Steuerinformation und -Werkzeuginformation beschreiben, die gemeinsam für ein IPMP-System verwendet werden, um Inhalt zu schützen, wobei der IPMP-Schema-Deskriptor und die DID nicht in dem Inhalt vor-enthalten sind,
einen Extraktor (6.22), der den IPMP-Schema-Deskriptor einschließlich der IPMP-Information aus der empfangenen DID extrahiert,
einen IPMP-Parser (2.2), der den IPMP-Schema-Deskriptor parst, und
einen IPMP-Werkzeug-Manager (6.23) oder einen Nachrichte-Router (6.24), der die IPMP-Information interpretiert, die in dem IPMP-Schema-Deskriptor enthalten ist und die von dem IPMP-Parser.(2.2) übertragen wird, und der den Schutz an dem Inhalt in dem Terminal (6.20) **durch** Aktivieren des Schutzes an den Ressourcen durchsetzt.

## Revendications

1. Procédé de traitement d'une description de schéma IPMP pour un Objet Numérique (3.12) dans un serveur (6.10),
dans lequel le serveur ajoute des informations de protection dans le contenu de l'Objet Numérique afin d'envoyer le contenu protégé à un terminal (6.20),
le procédé étant **caractérisé par** :
la création d'un descripteur de schéma IPMP (3.2, 3.3, 3.4) incluant des informations IPMP basées sur un Langage et Modèle de Description de Schéma IPMP flexible décrivant une information de commande IPMP et une information d'outil couramment utilisées pour qu'un système IPMP protège un contenu, lorsqu'une Déclaration d'Objet Numérique (DID) avec sa ressource référée est créée et codée, le descripteur de schéma IPMP et la DID n'étant pas pré-inclus dans le contenu ;
l'intégration du descripteur de schéma IPMP (3.2, 3.3, 3.4) dans la DID à un emplacement spécifié devant être distribué aux Utilisateurs ; et
le transfert de la DID à un terminal (6.20) des Utilisateurs,
dans lequel le terminal (6.20) inclut un Analyseur IPMP (2.2) qui opère sur la base du Langage et Modèle de Description de Schéma IPMP pour extraire le descripteur de schéma IPMP (3.2, 3.3, 3.4) de la DID, et
dans lequel le terminal (6.20) inclut un Gestionnaire d'Outil (6.23) ou un Routeur de Message (6.24) destinés à interpréter les informations PIP, incluses dans le descripteur de schéma IPMP (3.2, 3.3, 3.4) et extraites et transférées par l'analyseur IPMP (2.2), et destinés à réaliser la protection sur le contenu dans le terminal (6.20).

2. Procédé de traitement d'une description de Schéma IPMP pour un Objet Numérique dans le serveur (6.10) selon la revendication 1, comprenant en outre les étapes suivantes consistant à :
produire un descripteur d'information de commande IPMP (3.2), faisant partie du descripteur de schéma IPMP, sur la base du Langage et Modèle de Description de Schéma IPMP pour spécifier les informations IPMP nécessaires sur un élément parmi une Liste d'Outils, un Porte-Outil IPMP et un Détenteur de Droits IPMP ; et
placer le descripteur d'information de commande IPMP (3.2) sous la DID au début d'un élément de Déclaration du Descripteur de Conteneur, devant être distribué aux Utilisateurs.

3. Procédé de traitement d'une description de Schéma IPMP pour un Objet Numérique dans le serveur (6.10) selon la revendication 1, comprenant les étapes consistant à :
produire un descripteur IPMP (3.3, 3.4), faisant partie du descripteur de schéma IPMP, sur la base du Langage et Modèle de Description de Schéma IPMP pour spécifier les informations IPMP nécessaires sur un élément parmi une information d'Outil IPMP complètement décrite et un message de commande associé pour une ressource protégée spécifique (3.17) ; et
placer le descripteur IPMP (3.3, 3.4) dans le Descripteur de ressource le plus proche (3.18) à l'intérieur du même élément parent Composant sous la DID, devant être distribué aux Utilisateurs.

4. Procédé de traitement d'une description de schéma IPMP pour un Objet Numérique dans le serveur (6.10) selon la revendication 1, comprenant les étapes consistant à :
chiffrer uniquement le descripteur de schéma IPMP (3.2, 3.3, 3.4) en utilisant un quelconque algorithme de chiffrement existant ; et
intégrer le descripteur de schéma IPMP chiffré incluant l'information IPMP à la DID.

5. Procédé de traitement d'une description de Schéma IPMP pour un Objet Numérique dans le serveur (6.10) selon la revendication 1, comprenant les étapes consistant à :
signer numériquement uniquement le descripteur de schéma IPMP (3.2, 3.3, 3.4) en utilisant un quelconque algorithme de signature existant ; et
intégrer le descripteur de schéma IPMP signé incluant l'information IPMP à la DID.

6. Procédé de traitement d'une description de Schéma IPMP pour un Objet Numérique (3.12) dans un terminal (6.20),
dans lequel, sur la base d'un Langage et Modèle de Description de Schéma IPMP flexible décrivant une information de commande IPMP et une information d'outil couramment utilisées pour qu'un système IPMP protège un contenu, un serveur (6.10) crée un descripteur de schéma IPMP (3.2, 3.3, 3.4) incluant une information IPMP sur la base du Langage et Modèle de Description de Schéma IPMP lorsqu'une Déclaration d'Objet Numérique (DID) avec sa ressource référée est créée et codée, le descripteur de schéma IPMP et la DID n'étant pas pré-inclus dans le contenu ;
dans lequel le serveur (6.10) intègre le descripteur de schéma IPMP à la DID à un emplacement spécifié devant être distribué aux Utilisateurs ; et
dans lequel le serveur (6.10) transfère la DID à un terminal (6.20) des Utilisateurs qui est installé avec un analyseur IPMP (2.2) sur la base du Langage et Modèle de Description de Schéma IPMP pour extraire le descripteur de schéma IPMP de la DID;
le procédé étant **caractérisé par** :
la réception de la DID et sa ressource référée avec l'information IPMP dans le descripteur de schéma IPMP dans le terminal (6.20) ;
l'extraction du descripteur de schéma IPMP incluant l'information IPMP de la DID reçue ;
l'analyse du descripteur de schéma IPMP par l'Analyseur IPMP (2.2) dans le terminal ;
le transfert de l'information IPMP à un Gestionnaire d'Outil IPMP (6.23) ou un Routeur de Message (6.24) dans le terminal ;
l' interprétation de l'information IPMP incluse dans le descripteur de schéma IPMP qui réalise la protection sur le contenu dans le terminal, et
l'activation de la protection sur des ressources dans le terminal.

7. Procédé de traitement d'une description de Schéma IPMP pour un Objet Numérique dans le terminal (6.20) selon la revendication 6, comprenant les étapes consistant à :
analyser la DID par un Analyseur de DID (2.1) dans le terminal (6.20) ;
détecter le descripteur de schéma IPMP (3.2, 3.3, 3.4) inclus dans la DID lorsque l'Analyseur de DID (2.1) rencontre les balises IPMP_Scheme du descripteur de schéma IPMP ;
extraire le descripteur IPMP incluant les informations IPMP de la DID reçue par les balises IPMP_Scheme et analyser le descripteur de schéma IPMP par l'Analyseur IPMP (2.2).

8. Procédé de traitement d'une description de Schéma IPMP pour un Objet Numérique dans le terminal (6.20) selon la revendication 6, comprenant les étapes consistant à :
analyser le descripteur de schéma IPMP par l'Analyseur IPMP (2.2) dans le terminal ;
détecter une information REL à l'intérieur du descripteur de schéma IPMP lorsque l'analyseur IPMP (2.2) rencontre une balise REL du descripteur de schéma IPMP ;
extraire l'information REL du descripteur de schéma IPMP par la balise REL et analyser l'information REL par un analyseur REL (2.4) ;
transférer des informations de comportement d'informations de droits à chaque composant dans le terminal, pour activer des droits et règles d'utilisation décrites par l'information REL.

9. Serveur (6.10) qui traite une description de Schéma IPMP pour un Objet Numérique, dans lequel le serveur ajoute des informations de protection dans le contenu de l'Objet Numérique afin d'envoyer le contenu protégé à un terminal (6.20),
le procédé étant **caractérisé par** :
un encodeur (6.11) qui encode un contenu pour créer une ressource ;
un processeur (6.12) qui crée une Déclaration d'Objet Numérique (DID) avec sa ressource référée, qui créée un descripteur de schéma IPMP (3.2, 3.3, 3.4) incluant des informations IPMP basées sur un Langage et Modèle de Description de Schéma IPMP flexible décrivant une information de commande IPMP et une information d'outil couramment utilisées pour qu'un système IPMP protège un contenu, le descripteur de schéma IPMP et la DID n'étant pas pré-inclus dans le contenu ; et qui intègre le descripteur de schéma IPMP dans la DID à un emplacement spécifié devant être distribué aux Utilisateurs ; et
un émetteur (6.13) qui transmet la DID à un terminal (6.20) des Utilisateurs.

10. Terminal (6.20) qui traite une description de Schéma IPMP pour un Objet Numérique, **caractérisé par** :
un récepteur (6.21) qui reçoit, depuis un serveur (6.10), une Déclaration d'Objet Numérique (DID) et sa ressource référée incluant des informations IPMP dans un descripteur de schéma IPMP (3.2, 3.3, 3.4) basées sur le Langage et Modèle de Description de Schéma IPMP décrivant une information de commande IPMP et une information d'outil couramment utilisées pour qu'un système IPMP protège un contenu, le descripteur de schéma IPMP et la DID n'étant pas pré-inclus dans le contenu ;
un extracteur (6.22) qui extrait le descripteur de schéma IPMP incluant les informations IPMP de la DID reçue;
un analyseur IPMP (2.2) qui analyse le descripteur de schéma IPMP ; et
un Gestionnaire d'Outil IPMP (6.23) ou un Routeur de Message (6.24) qui interprète les informations IPMP incluses dans le descripteur de schéma IPMP transféré depuis l'analyseur IPMP (202.), et qui réalise la protection sur le contenu dans le terminal (6.20) en activant la protection sur les ressources.
